# EUROPEAN PATENT APPLICATION

(11) **EP 4 699 994 A1**
(43) Date of publication of application: **25.02.2026**
(21) Application number: 24792441.8
(22) Date of filing: 26.03.2024
(51) Int. Cl.: C03C 27/12, B60R 21/12

(54) **VEHICULAR GLASS MODULE**

(30) Priority: 21.04.2023 JP 2023070006
(71) Applicant: Nippon Sheet Glass Company, Limited, Tokyo 108-6321 (JP)
(72) Inventor: FUJIWARA, Takeshi, Tokyo 108-6321 (JP); ASAOKA, Hisashi, Tokyo 108-6321 (JP)
(74) Representative: McDonald, Christopher Ian
(86) International application number: PCT/JP2024/011831
(87) International publication number: WO 2024/219165

(57) **Abstract**

A vehicular glass module (1) used as a partition member in a cabin (50) includes a laminated glass unit (10) including a first glass sheet disposed on one side (X1) of the cabin (50) and a second glass sheet disposed on the other side (X2) of the cabin (50); and an intermediate layer disposed between the first glass sheet and the second glass sheet and having a soundproofing function.

## Description

### Technical Field

The present invention relates to a vehicular glass module used as a partition member in a cabin.

### Background Art

In the related art, a partition plate for separating a driver's seat from a rear seat to prevent crime in taxis, luxury vehicles, or the like has been known (see, for example, Patent Literature 1).

The partition plate described in Patent Literature 1 is made of transparent polycarbonate and includes: a main body fixed to the upper side of a partition wall member for coupling right and left center pillars; a bending portion arcuately bent toward a vehicle front side; and an extension extending from the bending portion toward the vehicle front side.

### Citation List

### Patent Literature

Patent Literature 1: WO 2014/129074

### Summary of Invention

### Technical Problem

Partition members in cabins in the related art are made of transparent resin as described in Patent Literature 1. Upon receipt of an impact from the rear seat, such a partition member tilts forward and adversely affects a driver. Besides, the transparent resin is aesthetically undesirable and is also undesirable from the viewpoint of privacy protection because the driver can hear conversation of passengers sitting in the rear seat. In addition, in a case where such a partition member is used for electric vehicles widely used in these days, the quietness is compromised by external noise.

In view of this, there is a demand for vehicular glass modules as partition members, having superior aesthetics and being capable of improving vehicle performance.

### Solution to Problem

A feature configuration of a vehicular glass module according to the present invention is a vehicular glass module used as a partition member in a cabin and includes: a laminated glass unit including a first glass sheet disposed on one side of the cabin and a second glass sheet disposed on the other side of the cabin; and an intermediate layer disposed between the first glass sheet and the second glass sheet and having a soundproofing function.

In this configuration, the vehicular glass module used as the partition member in the cabin includes the laminated glass unit. As a result, the vehicular glass module can produce a glossy appearance, thereby offering superior aesthetics. Since the intermediate layer having a soundproofing function is disposed between the first glass sheet and the second glass sheet, it is possible to suppress sound leakage from one space to the other space out of spaces separated from each other by the vehicular glass module. Hereby, in a case where the vehicular glass module is disposed between a driver's seat on one side of the cabin and a rear seat on the other side of the cabin, for example, the conversation of passengers sitting in the rear seat is hard to reach the driver.

It is necessary that the intermediate layer having a soundproofing function have a predetermined thickness to perform the soundproofing function appropriately. Accordingly, even if an impact is applied to the second glass sheet in the vehicular glass module, for example, the intermediate layer acts as a breakage prevention member for the first glass sheet. Hereby, in a case where the vehicular glass module is disposed between the driver's seat and the rear seat, for example, it is also possible to prevent such a problem that the partition member tilts forward and pushes the driver. Thus, the vehicular glass module has superior aesthetics and is capable of improving vehicle performance.

Another feature configuration may be that the partition member separates a driver's seat from a rear seat.

With this configuration in which the vehicular glass module separates the driver's seat from the rear seat, the conversation of passengers sitting in the rear seat is hard to reach the driver, for example, and the partition member having superior aesthetics can offer a sense of quality.

Another feature configuration may be that the partition member is fixed to an inner wall of the cabin or a back surface of a backrest of the driver's seat.

With this configuration in which the vehicular glass module is fixed to the inner wall of the cabin or the back surface of the backrest of the driver's seat, it is not necessary to provide a partition wall member or the like for coupling right and left center pillars to support the vehicular glass module, thereby making it possible to preserve cabin spaciousness.

Another feature configuration may be that the partition member partitions the cabin into a first space in which the driver's seat is disposed and a second space in which the rear seat is disposed.

With the vehicular glass module in this configuration in which the cabin is partitioned into the first space in which the driver's seat is disposed and the second space in which the rear seat is disposed, the conversation of passengers sitting in the rear seat does not reach the driver, thereby making it possible to secure privacy more. Besides, since the cabin is partitioned by the vehicular glass module separating the driver's seat from the rear seat, passengers sitting in the rear seat do not have a feeling of pressure.

Another feature configuration may be that the partition member separates a rear seat from a cargo compartment provided behind the rear seat.

With this configuration in which the vehicular glass module separates the rear seat from the cargo compartment, engine sound or the like from a following vehicle is hard to reach the rear seat, thereby making it possible to provide a comfortable cabin space to passengers sitting in the rear seat.

Another feature configuration may be that the partition member is fixed to an inner wall of the cabin or a back surface of a backrest of the rear seat.

With this configuration in which the vehicular glass module is fixed to the inner wall of the cabin or the back surface of the backrest of the driver's seat, the vehicular glass module does not disturb the space of the cargo compartment, thereby making it possible to secure the conventional function of the cargo compartment.

Another feature configuration may be that the partition member partitions the cabin into a first space in which the rear seat is disposed and a second space in which the cargo compartment is disposed.

With the vehicular glass module in this configuration in which the cabin is partitioned into the first space in which the rear seat is disposed and the second space in which the cargo compartment is disposed, engine sound or the like from a following vehicle does not reach the rear seat, thereby making it possible to provide a more comfortable cabin space to passengers sitting in the rear seat.

Another feature configuration may be that the first glass sheet and the second glass sheet have a compressive stress of 70 MPa or less.

With this configuration in which the strengths of the first glass sheet and the second glass sheet are lowered, even if an impact is applied to the second glass sheet, the second glass sheet is broken immediately, and the intermediate layer acts as a breakage prevention member for the first glass sheet. Besides, since the first glass sheet and the second glass sheet can have small thicknesses, the vehicular glass module can be reduced in weight.

Another feature configuration may be that the laminated glass unit is flat sheet glass.

With this configuration in which the laminated glass unit is flat sheet glass, it is possible to prevent such a problem that the vehicular glass module narrows the cabin space.

Another feature configuration may be that the laminated glass unit is curved sheet glass.

With this configuration in which the laminated glass unit is curved sheet glass, light reflected from its curved surface is scattered in the up-down direction of the vehicle, thereby making it possible to prevent such a problem that a person sitting in the rear seat feels dazzled.

Another feature configuration may be that the vehicular glass module further includes a light control layer exhibiting a parallel light transmittance of less than 30% in either one of a voltage application state and a voltage non-application state and exhibiting a parallel light transmittance of 30% or more in the other one of the voltage application state and the voltage non-application state, the light control layer is laminated in the intermediate layer, and the intermediate layer includes a first intermediate layer disposed between the first glass sheet and the light control layer, and a second intermediate layer disposed between the second glass sheet and the light control layer.

With this configuration in which the vehicular glass module as the partition member includes the light control layer, it is possible to achieve both a sense of quality and privacy protection.

Another feature configuration may be that the light control layer exhibits a parallel light transmittance of 20% or less in either one of the voltage application state and the voltage non-application state and exhibits a parallel light transmittance of 40% or more in the other one of the voltage application state and the voltage non-application state.

With this configuration in which the parallel light transmittance of the light control layer largely varies depending on whether voltage is applied or not, the vehicular glass module can more effectively achieve both a sense of quality and privacy protection.

Another feature configuration may be that the vehicular glass module further includes a light control layer exhibiting a haze of 10% or more in either one of a voltage application state and a voltage non-application state and exhibiting a haze of less than 10% in the other one of the voltage application state and the voltage non-application state, the light control layer is laminated on the intermediate layer, and the intermediate layer includes a first intermediate layer disposed between the first glass sheet and the light control layer, and a second intermediate layer disposed between the second glass sheet and the light control layer.

With this configuration in which the vehicular glass module as the partition member includes the light control layer, it is possible to achieve both a sense of quality and privacy protection.

Another feature configuration may be that the light control layer exhibits a haze of 20% or more in either one of the voltage application state and the voltage non-application state and exhibits a haze of 8% or less in the other one of the voltage application state and the voltage non-application state.

With this configuration in which the haze of the light control layer largely varies depending on whether voltage is applied or not, the vehicular glass module can more effectively achieve both a sense of quality and privacy protection.

Another feature configuration may be that the light control layer has a surface area smaller than a surface layer of the intermediate layer, and the light control layer is provided with a protective layer provided on a surface of the light control layer which surface is in contact with the intermediate layer.

Generally, the intermediate layer has a surface with a high Young's modulus and contains a large amount of plasticizer to secure strength, and the plasticizer contained in the intermediate layer tends to adversely affect electronic components of the light control layer. In view of this, with this configuration in which the light control layer is provided with the protective layer on the surface of the light control layer which surface is in contact with the intermediate layer, it is possible to prevent the intermediate layer from degrading the function of the light control layer.

### Brief Description of Drawings

Fig. 1 is a sectional view of a vehicular glass module according to a first embodiment;
Fig. 2 is a side view illustrating the inside of a cabin in which the vehicular glass module according to the first embodiment is disposed;
Fig. 3 is a schematic perspective view of the cabin in which the vehicular glass module according to the first embodiment is disposed, as viewed from a rear seat;
Fig. 4 is a side view illustrating a modification of the first embodiment;
Fig. 5 is a side view illustrating the inside of a cabin in which a vehicular glass module according to a second embodiment is disposed;
Fig. 6 is a side view of the inside of the cabin and illustrating a modification of the vehicular glass module according to the second embodiment;
Fig. 7 is a side view illustrating the inside of a cabin in which a vehicular glass module according to a third embodiment is disposed;
Fig. 8 is a side view illustrating a modification of the third embodiment;
Fig. 9 is a sectional view of a vehicular glass module according to an alternative embodiment; and
Fig. 10 is a plan view of the vehicular glass module according to the alternative embodiment.

### Description of Embodiments

The following describes embodiments of a vehicular glass module according to the present invention with reference the drawings. The present embodiment deals with a partition member to be applied to vehicles such as taxis in which passengers ride in the rear seat, as one example of the vehicular glass module. However, the present invention is not limited to the following embodiments and can be variously modified without departing from the gist of the present invention.

### [First Embodiment]

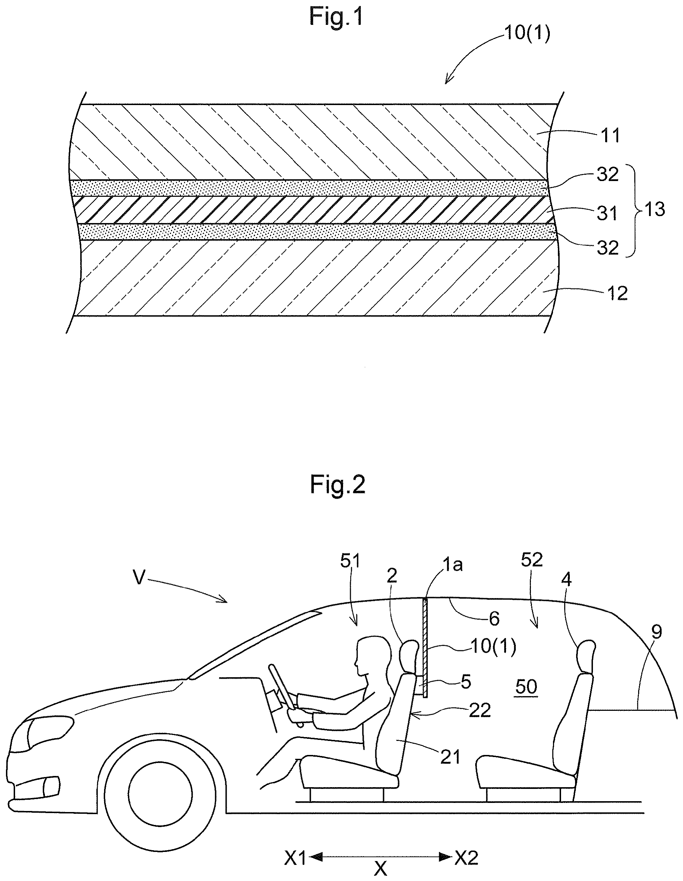

While reference to the drawings, one embodiment of a laminated glass unit 10 for the vehicular glass module 1 will be described. The vehicular glass module 1 is used as a partition member in a cabin 50 (see Fig. 2).

Fig. 1 is a sectional view of the laminated glass unit 10 for the vehicular glass module 1 (hereinafter referred to as a "glass module 1") according to the present embodiment. As illustrated in Fig. 1, the laminated glass unit 10 according to the present embodiment includes a first glass sheet 11, a second glass sheet 12, and an intermediate layer 13 sandwiched between these glass sheets. The intermediate layer 13 can be formed by a core layer 31 and a pair of outer layers 32 sandwiching the core layer 31. However, this is just an example, and details will be described later.

In the glass module 1, the first glass sheet 11 is disposed on a front side X1 (one example of one side in the cabin 50) in a vehicle front-rear direction X (see Fig. 2), and the second glass sheet 12 is disposed on a rear side X2 (one example of the other side in the cabin 50) in the vehicle front-rear direction X. The intermediate layer 13 is disposed between the first glass sheet 11 and the second glass sheet 12 and has a soundproofing function.

Well-known glass sheets can be used for the first glass sheet 11 and the second glass sheet 12, and they can be formed of general transparent glass. The following describes one example of transparent glass.

### (Transparent Glass)

SiO₂: 70% by mass to 73% by mass
Al₂O₃: 0.6% by mass to 2.4% by mass
CaO: 7% by mass to 12% by mass
MgO: 1.0% by mass to 4.5% by mass
R₂O: 13% by mass to 15% by mass (R represents alkali metal)
Total Iron Content (T-Fe₂O₃) expressed as Fe₂O₃: 0.08% by mass to 0.14% by mass

The thickness of the laminated glass unit 10 according to the present embodiment is not limited in particular. However, from the viewpoint of lightweighting, the total thickness of the first glass sheet 11 and the second glass sheet 12 is preferably 2.4 mm to 3.8 mm, more preferably 2.6 mm to 3.4 mm, and particularly preferably 2.7 mm to 3.2 mm. In order to achieve lightweighting, it is necessary to decrease the total thickness of the first glass sheet 11 and the second glass sheet 12, and the thickness of each glass sheet is not limited in particular. The shapes of the first glass sheet 11 and the second glass sheet 12 may be a plane shape or a curved shape.

The first glass sheet 11 and the second glass sheet 12 can have a compressive stress of 150 MPa or less, 70 MPa or less, 50 MPa or less, or the like. In the present embodiment, the first glass sheet 11 and the second glass sheet 12 have a compressive stress of 70 MPa or less. Thus, the strengths of the first glass sheet 11 and the second glass sheet 12 are lowered. Accordingly, even if an impact is applied to the second glass sheet 12, the second glass sheet 12 is broken immediately, and the intermediate layer 13 acts as a breakage prevention member for the first glass sheet 11. Besides, since the first glass sheet 11 and the second glass sheet 12 can have small thicknesses, the glass module 1 can be reduced in weight. In a case where the first glass sheet 11 and the second glass sheet 12 have a curved shape, compressive stress is imparted to the first glass sheet 11 and the second glass sheet 12 by their shape, and therefore, the compressive stresses of the glass sheets themselves (the first glass sheet 11 and the second glass sheet 12) may be 40 MPa or more. In a case where the compressive stresses of the first glass sheet 11 and the second glass sheet 12 are increased, the breakage prevention effect of the first glass sheet 11, caused by the breakage of the second glass sheet 12, is not achieved, but the glass module 1 can firmly secure a free design property due to the presence of its curved surface.

The intermediate layer 13 is formed by a plurality of layers. As an example, as illustrated in Fig. 1, the intermediate layer 13 can be formed by a three-layer structure in which a soft core layer 31 is sandwiched between a pair of outer layers 32, 32 having higher rigidity than that of the soft core layer 31. However, the intermediate layer 13 is not limited to this, and the intermediate layer 13 should be formed by a plurality of layers including the core layer 31 and at least one outer layer 32 disposed on the first glass sheet 11 side. For example, an intermediate layer 13 formed by two layers including the core layer 31 and one outer layer 32 disposed on the first glass sheet 11 side, an intermediate layer 13 including two or more even-numbered outers layers 32 disposed to sandwich the core layer 31, or an intermediate layer 13 including odd-numbered outer layer 32 on one side of the core layer 31 and even-numbered outer layers 32 on the other side of the core layer 31 may be employed.

As the number of outer layers 32 increases, the soundproofing performance also increases.

In order to achieve the soundproofing function, the total thickness of the outer layer 32 in the intermediate layer 13 is preferably 0.50 mm or more. The total thickness of the outer layer 32 is more preferably 0.70 mm or more. Here, as the thickness of the outer layer 32 increases, the amount of plasticizer per unit area increases. In a case where the intermediate layer 13 includes multiple outer layers 32, and the intermediate layer 13 is formed by the core layer 31 and the pair of outer layers 32, 32 disposed to sandwich the core layer 31 as illustrated in Fig. 1, the amount of plasticizer in the outer layers 32 increases to reduce the Young's modulus of the core layer 31. One example of the Young's modulus of the outer layers 32 is 441 MPa, one example of the Young's modulus of the core layer 31 is 19 MPa, and the Young's modulus of the core layer 31 is preferably 9.5 MPa. The outer layer 32 contains a large amount of plasticizer to reduce the Young's modulus of the core layer 31.

As far as the core layer 31 is softer than the outer layer 32, the hardness of the core layer 31 is not particularly limited, but the material of the core layer 31 can be selected based on the Young's modulus, for example. More specifically, the Young's modulus of the core layer 31 is preferably 1 MPa or more at a frequency of 100 Hz and at a temperature of 20°C. The upper limit of the Young's module is not limited in particular, but the Young's module is preferably 25 MPa or less, further preferably 20 MPa or less, particularly preferably 18 MPa or less, more preferably 14 MPa or less, and still further preferably 10 MPa or less. This range makes it possible to prevent a decrease in STL (Sound Transmission Loss) in a low frequency range of approximately 3500 Hz or less.

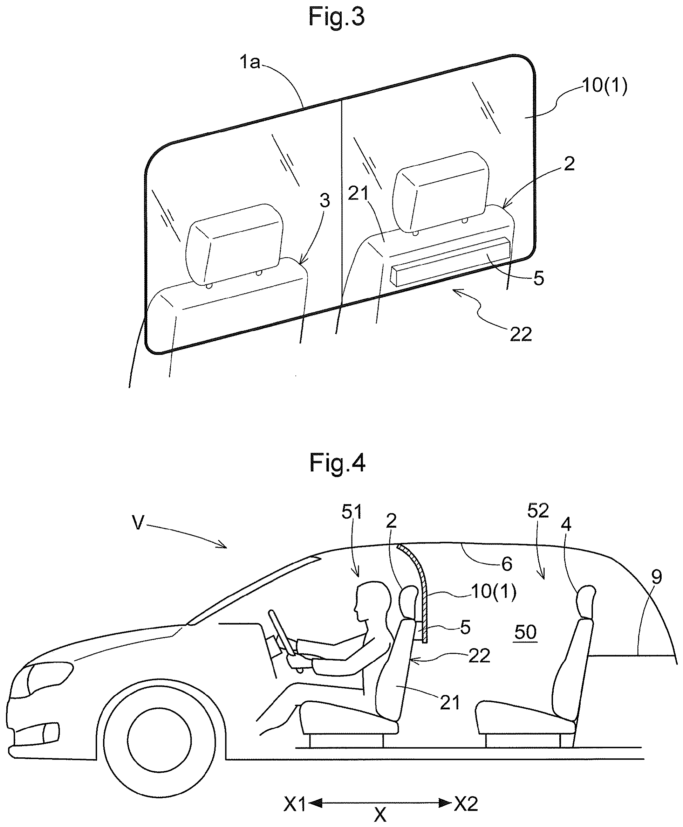

As illustrated in Figs. 2, 3, a driver's seat 2 is disposed on one side in the right-left direction in a front part of the cabin 50 of a vehicle V, and a passenger seat 3 is disposed on the other side in the right-left direction. A rear seat 4 is disposed on the rear side X2 in the vehicle front-rear direction X relative to the driver's seat 2 and the passenger seat 3 in the cabin 50. The glass module 1 as a partition member is disposed along the vehicle width direction between the driver's seat 2 / the passenger seat 3 and the rear seat 4. Since the glass module 1 is disposed between the driver's seat 2 / the passenger seat 3 and the rear seat 4, the glass module 1 performs a soundproofing function in the vehicle V such as a taxi.

More specifically, the glass module 1 is extended in the vehicle width direction and fixed to a back surface 22 of a backrest 21 of the driver's seat 2 via a bracket 5. The glass module 1 is disposed such that its upper end portion 1a is located close to a ceiling-side interior material 6 of the vehicle V. Note that the glass module 1 may be disposed between the rear seat 4 and either of the driver's seat 2 and the passenger seat 3. As illustrated in Figs. 2, 3, the laminated glass unit 10 is formed of flat sheet glass in the present embodiment.

In the present embodiment, since the glass module 1 includes the laminated glass unit 10, the glass module 1 can produce a glossy appearance, thereby offering superior aesthetics. Since the laminated glass unit 10 includes the intermediate layer 13 having a soundproofing function and disposed between the first glass sheet 11 and the second glass sheet 12, both spaces 51, 52 separated by the glass module 1 can suppress sound leakage from one space (for example, a second space 52) to the other space (for example, a first space 51). Hereby, when the glass module 1 is disposed between the driver's seat 2 and the rear seat 4, the conversation of passenger sitting in the rear seat 4 is hard to reach the driver.

In the glass module 1, it is necessary that the intermediate layer 13 having a soundproofing function have a predetermined thickness to perform the soundproofing function appropriately. Accordingly, even if an impact is applied to the second glass sheet 12 in the glass module 1, for example, the intermediate layer 13 acts as a breakage prevention member for the first glass sheet 11. This also makes it possible to prevent such a problem that the glass module 1 as a partition member tilts toward the front side X1 in the vehicle front-rear direction X to push the driver. Thus, the glass module 1 has superior aesthetics and is capable of improving vehicle performance.

When the glass module 1 is fixed to the back surface 22 of the backrest 21 of the driver's seat 2 like the present embodiment, it is not necessary to provide a partition wall member for coupling right and left center pillars to support the glass module 1, thereby making it possible to preserve cabin spaciousness. When the laminated glass unit 10 is formed of flat sheet glass, it is possible to prevent such a problem that the glass module 1 narrows the cabin space.

### [Modification 1 of First Embodiment]

As illustrated in Fig. 4, the glass module 1 (the laminated glass unit 10) disposed on the back surface 22 of the backrest 21 of the driver's seat 2 may be formed of curved sheet glass. With such a configuration, the entry of the glass module 1 toward the rear seat 4 is suppressed, thereby making it possible to improve hospitality. In a case where the laminated glass unit 10 is made of a curved glass sheet, light reflected from its curved surface is scattered in the up-down direction of the vehicle V, thereby making it possible to prevent such a problem that a display screen of a portable terminal or the like of a person sitting in the rear seat 4 is visible to others, thereby securing privacy.

### [Modification 2 of First Embodiment]

Modification 1 of the first embodiment has described an example in which the glass module 1 is fixed to the back surface 22 of the backrest 21 of the driver's seat 2. However, the glass module 1 may be fixed to the inner wall of the cabin 50, instead of being fixed to the back surface 22 of the backrest 21 of the driver's seat 2. More specifically, the glass module 1 may be fixed to a frame body or the like (not illustrated) separately provided on the inner wall of the cabin 50, for example.

### [Second Embodiment]

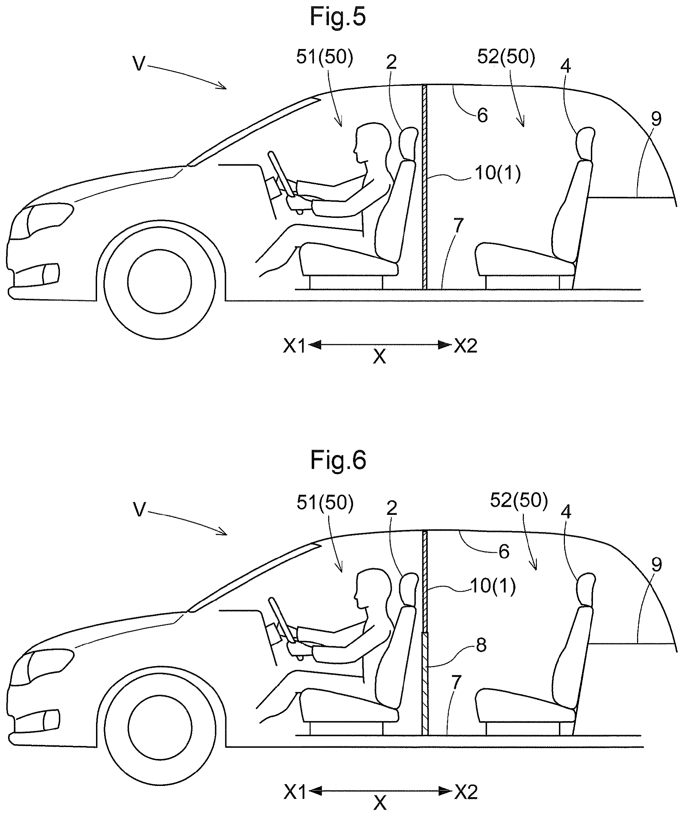

As illustrated in Fig. 5, the glass module 1 according to the second embodiment has an overall flat shape and is provided to extend from a floor surface 7 to the ceiling-side interior material 6 of the vehicle V. The glass module 1 is fixed to the floor surface 7 and the ceiling-side interior material 6 via a support (not illustrated), for example. In the present embodiment, a partition member formed by the glass module 1 partitions the cabin 50 into the first space 51 in which the driver's seat 2 is disposed and the second space 52 in which the rear seat 4 is disposed.

With the glass module 1 according to the present embodiment, in which the cabin 50 is partitioned into the first space 51 in which the driver's seat 2 is disposed and the second space 52 in which the rear seat 4 is disposed, the conversation of passengers sitting in the rear seat 4 does not reach the driver, thereby making it possible to secure privacy more. Besides, the cabin 50 is partitioned by the glass module 1 separating the driver's seat 2 from the rear seat 4, so that the passengers sitting in the rear seat 4 do not have a feeling of pressure.

### [Modification of Second Embodiment]

As illustrated in Fig. 6, the glass module 1 may be supported by a support member 8 extended in the up-down direction of the vehicle V. In the present modification, the support member 8 is fixed to the floor surface 7, and the cabin 50 is partitioned into the first space 51 and the second space 52 by the support member 8 and the glass module 1. This increases supporting force to the glass module 1 and stabilizes the position of the glass module 1.

### [Third Embodiment]

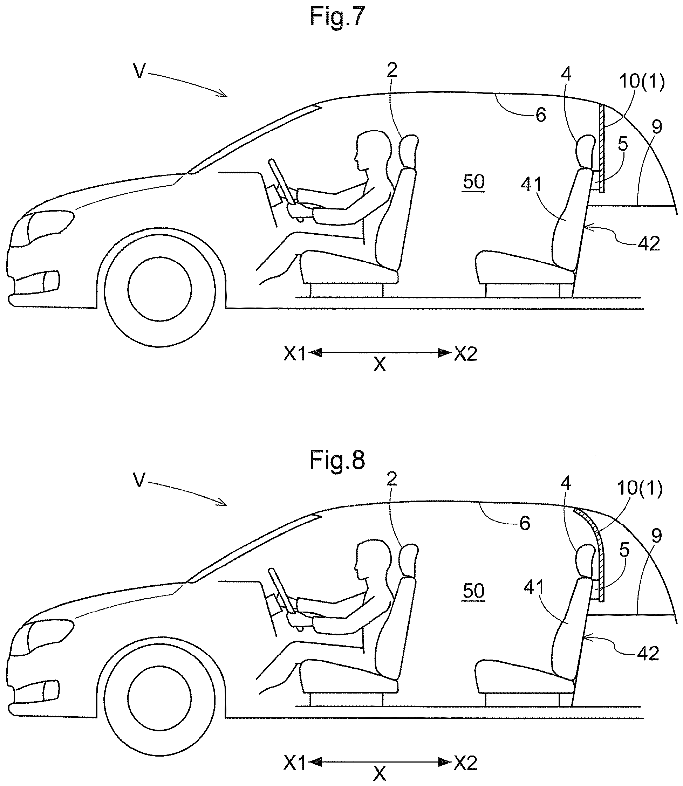

As illustrated in Fig. 7, the glass module 1 according to the third embodiment has an overall flat shape and is fixed to a back surface 42 of a backrest 41 of the rear seat 4. The glass module 1 as a partition member separates the rear seat 4 from a cargo compartment 9 provided behind the rear seat 4. More specifically, the glass module 1 is extended in the vehicle width direction and fixed to the back surface 42 of the backrest 41 of the rear seat 4 via the bracket 5. In the present embodiment, the glass module 1 is also disposed such that its upper end portion 1a is located close to the ceiling-side interior material 6 of the vehicle V.

With the present embodiment in which the glass module 1 separates the rear seat 4 from the cargo compartment 9, engine sound or the like from a following vehicle is hard to reach the rear seat 4, thereby making it possible to provide a comfortable cabin space to passengers sitting in the rear seat 4. Besides, when the glass module 1 is fixed to the back surface 42 of the backrest 41 of the rear seat 4, the glass module 1 does not disturb the space of the cargo compartment 9, thereby making it possible to secure the conventional function of the cargo compartment 9.

### [Modification 1 of Third Embodiment]

As illustrated in Fig. 8, the glass module 1 (the laminated glass unit 10) fixed to the rear seat 4 may be curved sheet glass. With the present modification in which the laminated glass unit 10 is curved sheet glass, light reflected from its curved surface is scattered in the up-down direction of the vehicle V, thereby making it possible to prevent such a problem that a person sitting in the rear seat 4 feels dazzle.

### [Modification 2 of Third Embodiment]

The third embodiment and Modification 1 thereof have described examples in which the glass module 1 is fixed to the back surface 42 of the backrest 41 of the rear seat 4. However, the glass module 1 may be fixed to the inner wall of the cabin 50, instead of being fixed to the back surface 42 of the backrest 41 of the rear seat 4. More specifically, the glass module 1 may be fixed to a frame body or the like (not illustrated) separately provided on the inner wall of the cabin 50, for example.

### [Alternative Embodiment of Layered Structure of Glass Module]

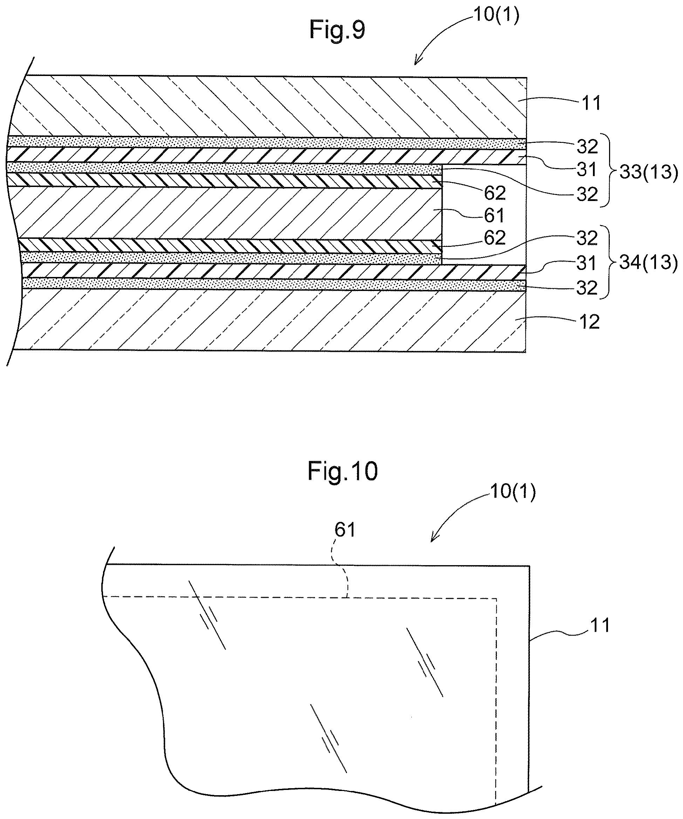

As illustrated in Figs. 9, 10, the glass module 1 may include a light control layer 61 laminated on the intermediate layer 13. The light control layer 61 exhibits a parallel light transmittance of less than 30% in either one of a voltage application state and a voltage non-application state and exhibits a parallel light transmittance of 30% or more in the other one of the voltage application state and the voltage non-application state. The light control layer 61 more preferably exhibits a parallel light transmittance of 20% or less in either one of the voltage application state and the voltage non-application state and exhibits a parallel light transmittance of 40% or more in the other one of the voltage application state and the voltage non-application state. The light control layer 61 may have a haze of 10% or more in either one of the voltage application state and the voltage non-application state and exhibits a haze of less than 10% in the other one of the voltage application state and the voltage non-application state. The light control layer 61 more preferably exhibits a haze of 20% or more in either one of the voltage application state and the voltage non-application state and exhibits a haze of 8% or less in the other one of the voltage application state and the voltage non-application state. The intermediate layer 13 includes a first intermediate layer 33 disposed between the first glass sheet 11 and the light control layer 61, and a second intermediate layer 34 disposed between the second glass sheet 12 and the light control layer 61. The first intermediate layer 33 and the second intermediate layer 34 each include the core layer 31 and the pair of outer layers 32, 32.

The light control layer 61 has a surface area smaller than that of the intermediate layer 13 (the first intermediate layer 33 and the second intermediate layer 34). The light control layer 61 is provided with a protective layer 62 on a surface of the light control layer 61 which surface is in contact with the intermediate layer 13.

The light control layer 61 is formed of a light control film or the like and creates a transparent state and an opaque state by controlling the haze value of the film based on whether current is applied or not, for example. That is, the light control layer 61 is a functional film capable of providing privacy. For example, well-known films such as a PDLC (Polymer Dispersed Liquid Crystal) type using liquid crystal, an SPD (Suspended Particle Device) type, an electrochromic type, and a thermochromic type can be used. For example, a light control film of the PDLC type can be formed by a liquid crystal layer, and a pair of transparent conductive films sandwiching the liquid crystal layer. A PET film, serving as the protective layer 62, is disposed on the outer surface of the light control layer 61 (each transparent conductive film). The liquid crystal layer includes a transparent polymer film and liquid crystal capsules formed by enclosing liquid crystal. In response to voltage being applied to the liquid crystal layer, the light control layer 61 performs light control such that the light control film becomes opaque, for example. The light control layer 61 may be configured such that the light control film becomes opaque while no voltage is applied to the liquid crystal layer, and the light control film becomes transparent in response to voltage being applied to the liquid crystal layer.

With the present embodiment in which the glass module 1 as the partition member includes the light control layer 61, it is possible to achieve both a sense of quality and privacy protection.

Since the glass module 1 is used as the partition member in the cabin, the intermediate layer 13 has a large thickness due to a demand of higher sound insulation, and the outer layer 32 of the intermediate layer 13 contains a large amount of plasticizer. When the plasticizer contained in the outer layer 32 comes into contact with the light control layer 61, there is a risk that a film portion or other portions of the light control layer 61 may deteriorate. Because of this, the glass module 1 requires a structure for protecting the light control layer 61.

In the present embodiment, in the glass module 1, the light control layer 61 has a surface area smaller than that of the intermediate layer 13. Generally, in order that the intermediate layer 13 secures strength, the outer layer 32 on the surface of the intermediate layer 13 exhibits a high Young's modulus and contains a large amount of plasticizer. Because of this, the plasticizer contained in the outer layer 32 tends to adversely affect electronic components or other components of the light control layer 61. With the present embodiment in which the protective layer 62 is provided on the surface of the light control layer 61 which surface is in contact with the intermediate layer 13, it is possible to prevent the intermediate layer 13 from degrading the function of the light control layer 61.

In the example illustrated in Fig. 9, an end portion of the protective layer 62 coincides with an end portion of the outer layer 32 of the intermediate layer 13 in a plate surface direction of the laminated glass unit 10. Instead of this, for example, the protective layer 62 may be extended further laterally from the outer layer 32 of the intermediate layer 13. An extension of the protective layer 62 may be formed by extending the PET film or may be separately formed of a sealant. In this modification, by providing the protective layer 62 on the surface of the light control layer 61 which surface is in contact with the intermediate layer 13, it is possible to effectively prevent the intermediate layer 13 from degrading the function of the light control layer 61.

In the example illustrated in Fig. 9, since the lateral surface of the light control layer 61 is exposed in the glass module 1, the light control layer 61 might deteriorate due to water entry from the lateral surface of the light control layer 61 or upon receipt of an impact therefrom. In view of this, in order to prevent water entry or the like from the lateral surface of the light control layer 61, an annular member (not illustrated) including no central portion in a plan view may be disposed to surround the light control layer 61. Examples of the material of the annular member for sealing the lateral surface of the light control layer 61 include curable resins (acryl-based resin, epoxy-based resin, silicone-based resin, butyl-based resin, and so on) containing no plasticizer. The annular member for sealing the lateral surface of the light control layer 61 can use a sealing material containing any of the above-mentioned curable resins, a sealing material in which an adhesive (acryl-based resin, silicone-based resin, urethane-based resin, or the like) is provided on the major surface of a resin base material (polyethylene terephthalate, polyethylene, polypropylene, polyimide, polycarbonate, polyvinyl chloride, or the like), or other sealing materials. By sealing the light control layer 61 with the annular member, the glass module 1 can surely maintain the function of the light control layer 61, thereby making it possible to improve its durability.

### [Other Embodiments]

(1) The above embodiment has described an example in which the front side X1 in the vehicle front-rear direction X represents "one side of the cabin 50," and the rear side X2 in the vehicle front-rear direction X represents the "other side of the cabin 50." However, the "one side of the cabin 50" and the "other side of the cabin 50" may be one side and the other side in the vehicle right-left direction.
(2) The light control layer 61 may be formed with the same surface area as the intermediate layer 13.
(3) The glass module 1 may be disposed between the driver's seat 2 and the rear seat 4, and further behind the rear seat 4.
(4) The glass module 1 disposed between the driver's seat 2 and the passenger seat 3, and the rear seat 4 may be a single laminated glass unit 10, or the laminated glass unit 10 for the driver's seat 2 and the laminated glass unit 10 for the passenger seat 3 may be separately disposed.
(5) The glass module 1 may not be disposed between the passenger seat 3 and the rear seat 4.

### Industrial Applicability

The present invention can be widely used as a vehicular glass module disposed in a cabin.

### Description of Reference Numerals

1: vehicular glass module (glass module)
2: driver's seat
4: rear seat
10: laminated glass unit
11: first glass sheet
12: second glass sheet
13: intermediate layer
21: backrest
22: back surface
33: first intermediate layer
34: second intermediate layer
41: backrest
42: back surface
50: cabin
51: first space
52: second space
61: light control layer
62: protective layer
V: vehicle
X: vehicle front-rear direction
X1: front side
X2: rear side

## Claims

1. A vehicular glass module used as a partition member in a cabin, the vehicular glass module comprising:
a laminated glass unit including a first glass sheet disposed on one side of the cabin and a second glass sheet disposed on the other side of the cabin; and
an intermediate layer disposed between the first glass sheet and the second glass sheet and having a soundproofing function.

2. The vehicular glass module according to claim 1, wherein
the partition member separates a driver's seat from a rear seat.

3. The vehicular glass module according to claim 2, wherein
the partition member is fixed to an inner wall of the cabin or a back surface of a backrest of the driver's seat.

4. The vehicular glass module according to claim 2, wherein
the partition member partitions the cabin into a first space in which the driver's seat is disposed and a second space in which the rear seat is disposed.

5. The vehicular glass module according to claim 1, wherein
the partition member separates a rear seat from a cargo compartment provided behind the rear seat.

6. The vehicular glass module according to claim 5, wherein
the partition member is fixed to an inner wall of the cabin or a back surface of a backrest of the rear seat.

7. The vehicular glass module according to claim 6, wherein
the partition member partitions the cabin into a first space in which the rear seat is disposed and a second space in which the cargo compartment is disposed.

8. The vehicular glass module according to any one of claims 1 to 7, wherein
the first glass sheet and the second glass sheet have a compressive stress of 70 MPa or less.

9. The vehicular glass module according to claim 8, wherein
the laminated glass unit is flat sheet glass.

10. The vehicular glass module according to any one of claims 1 to 7, wherein
the laminated glass unit is curved sheet glass.

11. The vehicular glass module according to any one of claims 1 to 7, further comprising:
a light control layer exhibiting a parallel light transmittance of less than 30% in either one of a voltage application state and a voltage non-application state and exhibiting a parallel light transmittance of 30% or more in the other one of the voltage application state and the voltage non-application state, the light control layer being laminated on the intermediate layer, wherein
the intermediate layer includes a first intermediate layer disposed between the first glass sheet and the light control layer, and a second intermediate layer disposed between the second glass sheet and the light control layer.

12. The vehicular glass module according to claim 11, wherein
the light control layer exhibits a parallel light transmittance of less than 20% or less in either one of the voltage application state and the voltage non-application state and exhibits a parallel light transmittance of 40% or more in the other one of the voltage application state and the voltage non-application state.

13. The vehicular glass module according to any one of claims 1 to 7, further comprising:
a light control layer exhibiting a haze of 10% or more in either one of a voltage application state and a voltage non-application state and exhibiting a haze of less than 10% in the other one of the voltage application state and the voltage non-application state, the light control layer being laminated on the intermediate layer, wherein
the intermediate layer includes a first intermediate layer disposed between the first glass sheet and the light control layer, and a second intermediate layer disposed between the second glass sheet and the light control layer.

14. The vehicular glass module according to claim 13, wherein
the light control layer exhibits a haze of 20% or more in either one of the voltage application state and the voltage non-application state and exhibits a haze of 8% or less in the other one of the voltage application state and the voltage non-application state.

15. The vehicular glass module according to claim 11, wherein
the light control layer has a surface area smaller than a surface layer of the intermediate layer, and
the light control layer is provided with a protective layer provided on a surface of the light control layer which surface is in contact with the intermediate layer.

16. The vehicular glass module according to claim 13, wherein
the light control layer has a surface area smaller than a surface layer of the intermediate layer, and
the light control layer is provided with a protective layer provided on a surface of the light control layer which surface is in contact with the intermediate layer.
